# EUROPEAN PATENT SPECIFICATION

(11) **EP 3 305 078 B1**
(45) Date of publication and mention of the grant of the patent: **04.12.2019**
(21) Application number: 17194677.5
(22) Date of filing: 04.10.2017
(51) Int. Cl.: A21D 6/00, A21D 8/02, A21D 8/04

(54) **NEW METHOD FOR MAKING FERMENTED BAKERY PRODUCTS**
NEUES HERSTELLUNGSVERFAHREN ZUR HERSTELLUNG VON FERMENTIERTEN BACKWAREN
NOUVELLE MÉTHODE DE FABRICATION DE PRODUITS DE BOULANGERIE FERMENTÉS

(30) Priority: 10.10.2016 IT 201600101204
(43) Date of publication of application: 11.04.2018
(73) Proprietor: Sangiorgio, Luciano, 00167 Roma (RM) (IT)
(72) Inventor: Sangiorgio, Luciano, 00167 Roma (RM) (IT)
(74) Representative: Fiammenghi, Eva

(56) References cited:
- DE-A1- 19 730 628
- DE-T2- 69 907 313
- Anonymous: "Pane con pre impasto al lievito madre e lunga maturazione | Menta e Rosmarino", , 15 July 2013 (2013-07-15), pages 1-35, XP055363939, Retrieved from the Internet: URL:http://www.menta-e-rosmarino.ifood.it/ 2013/07/pane-con-pre-impasto-al-lievito-ma dre-e.html [retrieved on 2017-04-11]
- Anonymous: "Mit Sauerteig gesundes und schmackhaftes Brot backen", , 9 January 2016 (2016-01-09), pages 1-4, XP002769177, Retrieved from the Internet: URL:http://web.archive.org/web/20160109190 355/http://www.smarticular.net/mit-sauerte ig-gesundes-und-schmackhaftes-brot-backen [retrieved on 2017-04-11]
- BRÜMMER J M ET AL: "Backtechnische Wirkung von Weizenvor- und Weizensauerteigen", GETREIDE MEHL UND BROT, BOCHUM, DE, vol. 38, no. 7, 1 January 1984 (1984-01-01), pages 203-205, XP002083189, ISSN: 0367-4177

## Description

The present invention regards a method for making (fermented) bakery products in particular, but not only, bread with the exclusive use of whole wheat and semi-whole wheat flours, of soft wheat, hard wheat or spelt with low "force index" index, obtained with natural stone grindstones. Flours not admixed with any improver, not stabilized, not irradiated, not genetically modified (GMO), not genetically manipulated; mainly but not exclusively, of "ancient grains", where "ancient grains" indicates local (autochthonous) grains which have not undergone artificial modifications induced by man. Confectionary products are excluded. For the production of bread, the method provides for the use of pure flours with a hydration higher than 70%. The method, for each type of flour, defines the parameters and the criteria for the process so as to standardize it and make it repetitive.

### State of the prior art

The difficulty in preparing bakery products, in particular bread, with these pure flours derives from their limited capacity to generate gluten. In the kneading step, **the gluten creates** - within the mass of water and flour - **a kind of crosslinking capable of retaining the gases** that have developed **during rising/fermentation** and prevent the exit thereof from the dough. With a low gluten content, the dough will have lower consistency, it will be hard to handle and have poor capacity to retain the gases, with consequent very limited fermentation. Due to these characteristics, the dough is not suitable for long fermentations/maturations. By leaving the dough at rest under cold conditions, it is possible to considerably lengthen the times of maturation and limit/block the fermentation. The cold within the dough does not block the enzymatic activities but slows the fermentation generated by the lactic and acetic organisms. Fermentation and maturation of the dough will continue, increasing the organoleptic characteristics of the finished product. The longer fermentation also allows the natural yeast to more greatly activate a number of microbial species that contribute to the production of metabolites, which render the aroma richer and more complete (acids, aldehydes, alcohols, esters and precursors such as peptides, amino acids, soluble carbohydrates, etc.).

### Object of the invention and field of the art

**Introduction.** Why a method dedicated to these flours? Because they have, mainly but not only, a protein composition that has a reduced inflammatory activity for the intestine with respect to the flours that have undergone artificial modifications by man. **"Monococcum spelt (grain), for example, does not have any cytotoxic or immunogenic activity towards the celiac mucous membrane, with the only exception of the Monlis variety (from MONICA Project)".** In the same manner, all the flours from "ancient grains" (autochthonous), as described above, have a reduced or zero inflammatory activity and a lower glycemic impact. The percentage of gluten is very low, ranging from 8 percent to 9.5 percent, ideal for those who have developed gluten-sensitivity. The new method, as important requirement, only uses the flours as defined above. At the present state, these flours, in order to remedy the abovementioned difficulties, are mixed with strong flours, using methods and tools suitable for strong flours; in this manner, products are obtained that are completely different with respect to those obtainable with the new method. Indeed, all the particular characteristics that the flours from ancient grains possess with respect to the others - especially the low or zero toxicity - are lost.

The analysis of the behavior of a dough made with the type of flours referred to by the invention, but with the existing methods, indicates a poor and weak gluten structure due to the reduced presence of the proteins that generate the gluten. The dough is, for this reason, characterized by limited handling possibilities (kneading and folds) and long fermentations/maturations.

The volume of the dough is reduced due to the limited possibility of the gluten structure to retain the gases of the rising; also the use of the folds (folding) has a limited impact on the volume. The final product is compact, heavy and moist. The limited maturation additionally does not allow the development - if not to a limited extent - of the enzymatic, bacteriological and chemical-physical processes responsible for the final characteristics of the finished product. The new method allows overcoming the abovementioned difficulties and obtaining a new product.

**Object.** The object is to make bakery products, especially but not exclusively bread, by only using flours of stone ground "ancient grains", as specified above; with indirect method; with combination of liquid starter (only made and refreshed with monococcum spelt flour or with the same flours used in making the pre-dough and the dough) and beer yeast in an extremely limited amount; with fermentation/maturation with the use of "cold"; with the use of tools for the introduction of air into the dough. The new method allows, among other things, the ability to considerably prolong the step of fermentation, with consequent possibility to allow the dough the greatest possible development of the enzymatic, bacteriological and chemical-physical processes responsible for the characteristics of the finished product. It also allows, with the introduction of air into the dough with tool, to confer the finished product with an open, diffused structure, not "heavy" and with lower internal humidity. The introduction of air with tool making more oxygen available also facilitates the enzymatic, bacteriological and chemical-physical processes in fermentation step. The new method allows the use of this flour type without mixing with other flours, and of a finished product (taking for example bread) with:
1. high digestibility and organoleptic characteristics due to long maturations;
2. an open structure, light because of the presence of cells due to the rising and to the introduction of air with tools in the kneading step;
3. the actual characteristics of the bread made with the indirect method;
4. the actual characteristics of the bread made with natural yeast;
5. the actual characteristics of only pure flour.

The new method also highlights the maturing the dough with long times (in relation to these types of flour) with cold technique, which however requires that the dough itself be placed to rest with very limited internal temperature. For this, it is necessary to use particular expedients which limit the heating produced by the instruments used in kneading step: water and flour with low temperature, work instruments (bowl, hook, whisks must be very cold). An important step, since if the dough rises when at rest at low temperature, it will break in brief times, obstructing the course of the maturation.

### More on the importance of the maturation:

The maturation and the fermentation are only two from among the innumerable processes that occur within a dough: *they are not* the same thing and they must *not* be confused with each other. The general concept of "fermentation" is rather known and is intended as the set of biological reactions that affect the transformation of the sugars, such as the lactic fermentation and the alcoholic fermentation. During such metabolisms, part of the sugars present in the doughs are transformed by the yeasts and by the bacteria into acids, carbon dioxide, water, ethyl alcohol, energy, etc. and macroscopically this indicates a lowering of the pH value, the production of aromatic and/or volatile substances, gas production and increase of volume of the mass. With the term "maturation", instead, it is intended the set of innumerable biochemical reactions which is at the base of the enzymatic decomposition or resolution of complex molecules into simpler molecules; from complex macromolecules into simple amino acids in the case of proteins, to monosaccharides in the case of polysaccharides. These reactions require long times, while fermentation is decidedly quicker; fermentation, however, can be very much slowed if the dough is placed at rest at low temperature (from +1°C to max +4°C). In this manner, the dough is given the possibility to mature; only upon completed maturation is gradual increase of the temperature conducted in order to increase, balance and optimize the fermentation process. Prolonged fermentation and maturation also have a non-secondary affect both on the preservation (shelf-life) and on the organoleptic characteristics of the finished product, conferring accentuated bouquets and flavors thereto, among other things.

### Description of the new method.

### Ingredients:

1. Li.Co.Li. (Starter in liquid form) exclusively made and refreshed with whole wheat or semi-whole wheat monococcum spelt flour ground with natural stone or with the same flour used for the pre-fermentation and for the dough;
2. Compressed fresh beer yeast, in combination with the Li.Co.Li., in an extremely limited amount thereof, not higher than 0.5% of the total of the flour provided for by the recipe;
3. Wheat flour as defined above;
4. Water (max hardness of 20 French degrees without gas);
5. Sea salt;
6. Barley malt

Seed oil only for greasing the bowl for the dough and for working.

### Steps

### 1 - Refreshing the Li.Co.Li (starter in liquid form)

Refresh the Li.Co.Li. twice in a row before using it. Water temperature, flour and ambient temperature will be pre-established so as to obtain a constant product.

### 2 - Pre-dough preparation

Preparation of the pre-dough executed in 2 steps: a) mixing - not kneading - the Li.Co.Li., the compressed fresh beer yeast and the previously-sieved flour, in all the provided water, mainly but not exclusively with a planetary mixer. The working time and the speed will be pre-established according to the instrument used; b) placing the pre-dough at rest with a temperature of 17-19C°, preferably 18C° and 70% humidity, using, mainly but not exclusively, a cell at controlled temperature and humidity. The temperature of the water and of the flour will be pre-established so as to obtain a pre-dough with a temperature of about 18C°. Ingredients of the pre-dough: flour: 50% of the total flour of the recipe; water: about 45% over flour of the pre-dough; Li.Co.Li: 10-15% over total flour of the recipe; compressed fresh beer yeast: 0.5-0.8% over flour of the pre-dough. The quantity of the Li.Co.Li and of the beer yeast also, but not only, depends on the type of flour and on the duration at rest. With this flour type and rests of 15-18 hours, 10% for Li.Co.Li and 0.5% for the beer yeast are approximately appropriate. The optimal temperature for the resting of the pre-dough is 18C°. The pre-dough must not be soft but lumpy-soft, not dry, not wet. If it is too strong, it could break the dough. The pre-dough must not collapse since it would become useless. At the end of the provided time, the pre-dough appears soft and with spongy structure but not too much so, and it will not increase very much in volume. The surface must not appear dry.

### 3- Dough preparation

Preparation of the dough executed in four steps. **First step:** dissolving the pre-dough with 3/4 of the residual water provided, mainly but not exclusively, with blade blender; adding the malt and the compressed fresh beer yeast and mixing, always with the previously-used instrument. The times of the two working operations and the speed of the instrument will be pre-established. **Second step:** now use a manual electric beater provided with two whisks or with a bench top mixer provided with adjustable double whisk or other equipment that still uses a double whisk. The double whisk must not be used within the dough but on the surface in a manner such that it only affects/penetrates the surface of the dough (a small thickness of the surface): it is this movement that is able to incorporate air into the dough without "breaking it", increasing the volume of the dough. Indeed, the two whisks take "a surface layer" of the dough and carry out (draw it) between them, progressively superimposing the surface layers of the dough itself. The use of the insufflation of pressurized air is excluded. During this operation, adding - a little at a time - about half of the residual flour and 3/4 of the residual water in small quantities. Little by little the dough will tend to be separated from the walls and will be swollen on itself. The temperature of the water and of the flour will be pre-established such that at the end of the working regarding the dough, its internal temperature is lower than about 18C°. The working time and speed will be pre-established according to the instrument used. This step is very important for this dough type: the air incorporated in this step will greatly improve the final structure of the bread.

**Third step:** Complete the kneading, mainly but not exclusively, with the planetary mixer (with kneader hook), adding the flour and the residual water, in the necessary quantity, and the salt; the time and speed of the instrument will be pre-established. **Fourth step:** completing the dough firming up, if necessary, by hand and rendering the dough smooth and uniform. The dough can be very soft. This step must be as quick as possible in order to avoid heating the dough, to avoid making "folds" (folding). Also for the preparation of the dough, the temperature of the water and of the flour will be pre-established so as to obtain a dough, before being placed to rest for the cold maturation, with a temperature of about 18C°. This step is very important since the object is to facilitate the maturation and slow the rising. The ingredients of the dough: flour: the residual 50% of the total flour of the recipe; water: about the total provided minus the quantity already used (max hardness of 20 French degrees without gas); compressed fresh beer yeast: 0.2-0.5% over residual flour; sea salt: 1.8% of salt over the total of the flour of the recipe; barley malt: 1-1.5% over the total of the flour of the recipe. Also the bowl and the hook of the planetary mixer and whisks must be cold.

### 4- Maturing the dough under cold conditions

Place the dough inside an oiled container (seed oil) and then at rest at 2-4C° and with approximately 70% humidity, mainly but not exclusively in a cell at controlled temperature and humidity, for the time necessary to obtain the longest maturation possible for the flour used. The time for the maturing depends on the type of flour used, on the dough's temperature before being placed under maturation. The approximate time for the maturation varies from 12 to 24 hours. The maturation at about 2-4C°, considerably slowing the rising (intended above all as swelling of the dough), allows the development of all those enzymatic and chemical-physical processes that greatly enhance the organoleptic characteristics of the finished product and not just its digestibility.

### 5- Reviving

In order to obtain the uniform fermentation through the entire mass and not only in the outermost layers of the dough, it is necessary to gradually revive the dough preferably first at 12C°, then at 20C°, for approximately 2-3 hours.

### 6- Fermentation ("Puntata")

After the reviving, place the dough on the kneading board (without flour) in order to give it structure with the folds (1 or more as a function of how it appears and reacts). Cover the dough after each fold, mainly but not exclusively, with a linen cloth. Leave the dough, then, rising at ambient temperature for about 2-3 hours, mainly but not exclusively covered with a linen cloth. The dough will tend to expand: this is fine, as long as the volume increases and the dough is increasingly softer and not compact. Use seed oil for greasing hands for the folding operation. Some of these flours have a very limited possibility of generating gluten and can be handled for a very limited time. In this case, place the dough on the kneading board (without flour), handle it in order to give it structure for a very brief time period, approximately 5 minutes, divide it into small dough forms, giving them the desired shape and placing them in the rising baskets as indicated hereinbelow. After the abovementioned rising, this dough type can be used for different bakery products - even enriched with the addition of extra virgin olive oil in the step of kneading with the planetary mixer.

### 7- Hand-shaping and final forming

Subsequently, when it is ready for the forming, proceed with the division into small dough forms (in the case of a single dough), giving them the desired shape and placing them in the rising baskets covered with oven paper or placing them in the rising baskets very well floured with semolina.

### 8-Final fermentation, "Appretto"

Place the rising baskets, covered mainly but not exclusively with a dampened linen cloth, for about 30-60 minutes at ambient temperature. Once this time has passed, proceed with the final rising step, heating the baskets from below, for about 1-2 hours. The temperature below the rising baskets must be lower than 28C°. Final fermentation in the basket. These doughs are delicate, they have a gluten structure that is not very strong and not very elastic: for this reason, if the heat is uniform, the upper surface - which is more exposed than the internal surface and the bottom - will tend to be broken first. If the heat source is placed under the dough, the higher surface will have a lower temperature than the bottom.

### 9- Baking and drying

When the small dough forms will have risen to the right point, make the cuts, if necessary, and transfer them with all the oven paper into containers for baking in oven. The cuts allow the gases to escape from the dough - such gases having been accumulated during the fermentation - in a manner such that the breads are not randomly broken. It is also possible to use aluminum containers (e.g. plum cake containers) with non-fixed walls, allowing the small dough forms to expand at the very start of baking and hence "create" its own shape. Bake (in a professional oven) in static mode, oven having been previously preheated. Baking (e.g. with a piece of about 1000 grams of dough): for approximately 15 minutes at 250C° with humidity; then for about 35 minutes at 220C° still with humidity; then remove from the container and place it again in the oven for about 10 minutes at 220C° without humidity. At this point, if baked (knocking on the bottom), leave it for approximately 15-30 minutes at 140C° in order to ensure that it dries and that the crust forms; in this step, the moisture must be able to exit/must be extracted from the oven.

## Claims

1. Method for making bakery products, preferably fermented, such as, by way of a non-limiting example, bread with the exclusive use of whole wheat flours and semi-whole wheat flours, of soft wheat, hard wheat or spelt, with low "force index", obtained with natural stone grindstones, **characterized in that** it is constituted by the following subsequent steps:
A) refreshing the starter in liquid form, commonly known with the name Li.Co.Li. (liquid starter): in said refreshing step, the starter in liquid form is refreshed two times consecutively before its use, by means of a predetermined quantity of water at pre-established temperature and a predetermined quantity of flour at pre-established temperature, said flour preferably being semi-whole wheat monococcum spelt flour or whole wheat flour ground by natural stone or the same flour used in the following steps for preparing the pre-dough (B) and for preparing the dough (C); said refreshing occurring in a setting provided with a predetermined temperature adapted to allow the obtainment of a constant product;
B) preparing the pre-dough to be executed in the following sub-steps:
B.1) mixing, with a predetermined speed and for a pre-established working time, the starter with a predetermined quantity of compressed fresh beer yeast and a predetermined quantity of previously-sieved flour, in a predetermined quantity of water corresponding to the total water provided in the recipe of said pre-dough; said mixing step preferably occurring in a planetary mixer;
B.2) resting said pre-dough at a temperature comprised between 17°C and 19°C, preferably 18°C and humidity equal to 70%; said resting step preferably occurring in a common cell at controlled temperature and humidity; said pre-dough being provided with a temperature preferably equal to 18°C; said pre-dough being constituted by the following ingredients:
- flour, in a quantity equal to 50% of the total flour of the recipe;
- water, in a quantity substantially equal to 45% of the flour of said pre-dough;
- "Li.Co.Li" starter, in a quantity comprised between 10% and 15% with respect to the total flour of the recipe; said quantity of starter "Li.Co.Li" varying in accordance with the type of flour and the duration of said resting step;
- compressed fresh beer yeast, in a quantity comprised between 0.5% and 0.8% with respect to the flour of the pre-dough; said quantity of beer yeast varying in accordance with the type of flour and the duration of said resting step;
said resting step having duration that is substantially comprised between 15 hours and 18 hours;
C) preparing the dough to be executed with the following ingredients:
- flour, in a quantity equal to the residual 50% of the total flour of the recipe;
- water, provided with maximum hardness equal to 20 French degrees, in a quantity substantially equal to the total water provided minus the quantity already used in the preceding working steps;
- compressed fresh beer yeast, in a quantity comprised between 0.2% and 0.5% over the total of the residual flour of the recipe;
- sea salt, in a quantity equal to 1.8% over the total of the flour of the recipe;
- barley malt, in a quantity comprised between 1% and 1.5% with respect to the total of the flour of the recipe;
said step of preparing the dough being adapted to be executed according to the following sub-steps:
C.1) dissolving said pre-dough with a quantity equal to 3/4 of the total provided residual water, by adding a predetermined quantity of said malt and a predetermined quantity of said compressed fresh beer yeast and mixing by means of a common blade blender at pre-established speed; said dissolving being **characterized by** a pre-established duration;
C.2) introducing air into the dough, in which, by using, by way of a non-limiting example, a manual electric beater provided with two whisks or a counter mixer provided with double adjustable whisk or any other mechanical instrument provided with a double whisk; said mechanical instrument being used, for a predetermined time interval and speed, only at a predetermined thickness starting from the surface of said dough in a manner so as to allow the introduction of air into the dough, increasing the volume thereof; during said step of introducing air into the dough, adding a quantity of flour equal to half the residual flour of the recipe and a quantity of water equal to 3/4 of the residual water of the recipe in a manner so as to allow the separation of said dough from the walls and its swelling; said flour and said water being provided with a predetermined temperature adapted to obtain a dough provided with a temperature lower than 18°C before being placed to rest for the cold maturation;
C.3) completing the dough, preferably carried out by means of said planetary mixer provided with kneader hook; in said step of completing the dough, adding said residual flour and water of the recipe and a predetermined quantity of salt, continuing to knead at a pre-established speed and for a pre-established time; said dough completing sub-step (C.3) possibly comprising the addition of a predetermined quantity of extra virgin olive oil;
C.4) possibly completing the dough firming up, preferably to be carried out by hand in order to render said dough smooth and uniform; said step of completing the dough firming up having a duration such to maintain the temperature of said dough stable, below 18°C, before being placed to rest for the cold maturation;
D) maturing said dough at low temperature; in said maturation step (D), said dough is placed inside a common container, previously oiled, preferably with seed oil, and left to rest for a time comprised between 12 hours and 24 hours at a temperature comprised between 2°C and 4°C and with humidity equal to about 70%; said maturation step (D) preferably but not exclusively occurring within a cell at controlled temperature and humidity;
E) reviving; in said reviving step (E), the temperature of said dough is gradually increased in two steps: a first step in which the temperature of said dough is preferably brought to 12°C and a second step in which the temperature of said dough is preferably brought to 20°C; said reviving step (E) being **characterized by** an overall duration comprised between 2 and 3 hours;
F) fermenting; in said fermenting step, said dough is placed on a kneading board and worked by hand, by an assigned user adapted to work with oiled hands, preferably oiled with seed oil, for a time interval with maximum 5 minutes duration, in order to make said dough assume a configuration provided with at least one fold; said fermenting step (F) being **characterized in that** said dough is covered with a common cloth, preferably linen, after each folding; said dough being subsequently left to rise for a time interval comprised between 2 and 3 hours; in said fermenting step (F), said dough can be possibly divided into a plurality of separate small dough forms with the desired shape; said small dough forms being placed to rise in suitable separate rising baskets;
G) hand-shaping and final forming; in said hand-shaping and final forming step (G), said dough being divided into a plurality of small dough forms with the desired shape; each of said small dough forms being placed in a corresponding rising basket, previously covered with a layer of common oven paper or previously floured with semolina;
H) final fermenting; in said final fermenting step (H), each of said plurality of rising baskets being covered, preferably by means of a common previously-dampened linen cloth, for a time interval comprised between 30 minutes and 60 minutes; at the end of said time interval, said rising baskets being heated from the bottom with a temperature preferably equal to 28°C, for a time interval comprised between 1 hour and 2 hours;
I) baking and drying; in said baking and drying step (I), a plurality of cuts are preferably made on each of said small dough forms, adapted to allow breaking the surface of said small dough forms in substantially pre-established points, and said small dough forms, together with said common oven paper layer, are transferred into corresponding containers adapted for baking in oven; said containers adapted for baking in oven preferably being constituted by common aluminum containers provided with flexible walls adapted to allow the expansion of said small dough forms; said baking and drying step occurring in at least four sub-steps:
- a first baking in static mode, in a suitable oven previously heated to a temperature equal to 250°C, with pre-established humidity, for a time interval substantially equal to 15 minutes;
- a second baking, at a temperature equal to 220°C, with pre-established humidity, for a time interval substantially equal to 35 minutes;
- a third baking, at a temperature equal to 220°C, in the absence of humidity, for a time interval substantially equal to 10 minutes; said third baking being **characterized in that** said small dough forms have been previously extracted from the corresponding containers;
- drying, in which said small dough forms are left inside said oven at a temperature equal to 140°C for a time interval comprised between 15 minutes and 30 minutes; said drying step being **characterized in that**, in said oven, a function of extraction of the internal humidity is applied;
said method also being **characterized by** the following specific techniques:
- use of low temperatures in the refreshing steps (A), in preparing the pre-dough (B), preparing the dough (C) and maturation (D);
- introduction of air in the formation of the dough;
- use of pure flours with hydration greater than 70%.

2. Method, according to claim 1, **characterized in that**, in said step of introducing air in the dough (C.2), a common mechanical instrument is used such as, by way of a non-limiting example, a manual electric beater with double whisk, a counter mixer with adjustable double whisk or any other instrument provided with a double whisk; said mechanical instrument being adapted to be used at a small thickness starting from the upper surface of said dough, in a manner so as to incorporate air in the dough, preventing the breakage thereof; said step of introducing air into the dough (C.2) being **characterized by** a duration and a working speed that are pre-established in accordance with the mechanical instrument used.

3. Method, according to claim 1, **characterized in that** said maturation step (D) is 2 to 5 times longer than the normal maturation step, which is 8 hours, preferably 3 times longer than the normal maturation step, i.e. 24 hours, in order to render the product thus obtained highly digestible, since the protein fraction due to the gluten is rendered more digestible.

## Patentansprüche

1. Verfahren zum Herstellen von vorzugsweise fermentierten Backwaren wie beispielsweise als nicht einschränkendes Beispiel Brot unter ausschließlicher Verwendung von Vollkornmehlen und Weizenhalbmehlen aus Weichweizen, Hartweizen oder Dinkel mit niedrigem "Kraftindex", erhalten mit Natursteinmahlsteinen, **dadurch gekennzeichnet, dass** es durch die folgenden nachfolgenden Schritten festgelegt ist:
A) Auffrischen des Vorteigs in flüssiger Form, allgemein bekannt unter dem Namen Li.Co.Li.(flüssiger Starter): in dem Auffrischschritt wird der Starter in flüssiger Form vor seiner Verwendung zweimal hintereinander mittels einer vorgegebenen Menge an Wasser bei einer vorgegebenen Temperatur und einer vorgegebenen Menge Mehl bei einer vorgegebenen Temperatur aufgefrischt, wobei es sich bei dem Mehl vorzugsweise um Weizen-Einkorn-Dinkel-Halbvollmehl oder Weizenvollkornmehl handelt, das durch Naturstein gemahlen wird, oder um das gleiche Mehl, das in den folgenden Schritten zum Zubereiten des Vorteigs (B) und zum Zubereiten des Teigs (C) verwendet wird; wobei das Auffrischen mit einer Einstellung erfolgt, die mit einer vorgegebenen Temperatur versehen ist, die geeignet ist, um die Erlangung eines gleichbleibenden Produkts zu ermöglichen;
B) Zubereiten des Vorteigs, was in den folgenden Teilschritten auszuführen ist:
B.1) Mischen des Starters mit einer vorgegebenen Geschwindigkeit und für eine vorgegebenen Verarbeitungszeit mit einer vorgegebenen Menge frischer Bierpresshefe und einer vorgegebenen Menge von zuvor gesiebtem Mehl in einer vorgegebenen Menge an Wasser, die dem in dem Rezept des Vorteigs bereitgestellten Gesamtwasser entspricht; wobei der Mischschritt vorzugsweise in einem Planetenmischer stattfindet;
B.2) Ruhen des Vorteigs bei einer Temperatur zwischen 17°C und 19°C, vorzugsweise 18°C und einer Feuchtigkeit von 70%; wobei der Ruheschritt vorzugsweise in einer gewöhnlichen Zelle bei kontrollierter Temperatur und Feuchtigkeit stattfindet; wobei der Vorteig mit einer Temperatur vorzugsweise gleich 18°C bereitgestellt wird; wobei der Vorteig aus den folgenden Bestandteilen besteht:
- Mehl in einer Menge gleich 50% des Gesamtmehls des Rezepts;
- Wasser in einer Menge im Wesentlichen gleich 45% des Mehls des Vorteigs;
- den "Li.Co.Li"-Starter in einer Menge zwischen 10% und 15% in Bezug auf das Gesamtmehl des Rezepts, wobei die Menge des Starters "Li.Co.Li" entsprechend dem Mehltyp und der Dauer des Ruheschritts variiert;
- frische Bierpresshefe in einer Menge zwischen 0,5% und 0,8% in Bezug auf das Mehl des Vorteigs; wobei die Menge der Bierhefe entsprechend dem Mehltyp und der Dauer des Ruheschritts variiert;
wobei der Ruheschritt eine Dauer von im Wesentlichen zwischen 15 Stunden und 18 Stunden aufweist;
C) Zubereiten des Teigs, was mit den folgenden Zutaten auszuführen ist:
- Mehl in einer Menge gleich den restlichen 50% des Gesamtmehls des Rezepts;
- Wasser, das mit einer maximalen Härte gleich 20 französischen Graden versehen ist, in einer Menge, die im Wesentlichen gleich dem gesamten bereitgestellten Wasser abzüglich der bereits in den vorangegangenen Arbeitsschritten verwendeten Menge ist;
- frische Bierpresshefe in einer Menge, die zwischen 0,2% und 0,5% über der Gesamtmenge des restlichen Mehls des Rezepts aufweist;
- Meersalz in einer Menge gleich 1,8% über der Gesamtmenge des Mehls des Rezepts;
- Gerstenmalz in einer Menge, die zwischen 1% und 1,5% in Bezug auf die Gesamtmenge des Mehls des Rezepts aufweist;
wobei der Schritt des Zubereitens des Teigs ausgebildet ist, um gemäß den folgenden Teilschritten ausgeführt zu werden:
C.1) Auflösen des Vorteigs mit einer Menge gleich 3/4 des insgesamt bereitgestellten restlichen Wassers durch Zugeben einer vorgegebenen Menge des Malzes und einer vorgegebenen Menge der frischen Bierpresshefe und Mischen mittels eines gewöhnlichen Flügelmischers mit vorgegebener Geschwindigkeit; wobei das Auflösen durch eine vorgegebene Dauer gekennzeichnet ist;
C.2) Einbringen von Luft in den Teig durch Verwendung, als nicht-beschränkendes Beispiel, eines manuellen elektrischen Quirls, der mit zwei Rührbesen ausgestattet ist, oder eines Gegenmischers, der mit einem verstellbaren Doppel-Schneebesen ausgestattet ist, oder eines anderen mechanischen Instruments, das mit einem Doppel-Schneebesen ausgestattet ist; wobei das mechanische Instrument für ein vorgegebenes Zeitintervall und eine vorgegebene Geschwindigkeit nur bei einer vorgegebenen Dicke verwendet wird, beginnend von der Oberfläche des Teigs auf eine Weise, um das Einbringen von Luft in den Teig zu ermöglichen, wodurch sich dessen Volumen vergrößert; während des Schrittes des Einbringens von Luft in den Teig: Hinzufügen einer Menge an Mehl, die gleich der Hälfte des restlichen Mehls des Rezeptes ist, und einer Menge an Wasser, die gleich 3/4 des Restwassers des Rezeptes ist, auf eine Weise, die das Ablösen Teigs von den Wänden und sein Quellen ermöglicht; wobei das Mehl und das Wasser mit einer vorgegebenen Temperatur bereitgestellt werden, die angepasst ist, um einen Teig zu erhalten, der mit einer Temperatur von weniger als 18°C versehen ist, bevor er platziert wird, um für die kalte Reifung zu ruhen;
C.3) Vervollständigen des Teigs, vorzugsweise ausgeführt mittels des mit Knethaken versehenen Planetenmischers; bei dem Schritt des Vervollständigens des Teigs:
Hinzufügen des restlichen Mehls und Wassers des Rezepts und einer vorgegebenen Menge von Salz, Fortsetzen, mit einer vorgegebenen Geschwindigkeit und für eine vorgegebenen Zeit zu kneten; wobei der Teigvervollständigungsteilschritt (C.3) möglicherweise die Zugabe einer vorgegebenen Menge von nativem Olivenöl extra umfasst;
C.4) möglicherweise Vervollständigen des Verfestigen des Teigs, vorzugsweise von Hand durchzuführen, um den Teig glatt und gleichmäßig zu machen; wobei der Schritt des Vervollständigens des Verfestigens des Teigs eine solche Dauer besitzt, dass die Temperatur des Teigs stabil unter 18°C gehalten wird, bevor er platziert wird, um für die kalte Reifung zu ruhen;
D) Reifen des Teigs bei niedriger Temperatur; in dem Reifungsschritt (D) wird der Teig in einem zuvor vorzugsweise mit Samenöl geölten, gewöhnlichen Behälter platziert und für eine Zeit zwischen 12 Stunden und 24 Stunden bei einer Temperatur zwischen 2°C und 4°C und mit einer Feuchtigkeit von etwa 70% ruhen gelassen wird; wobei der Reifungsschritt (D) vorzugsweise aber nicht ausschließlich in einer Zelle bei kontrollierter Temperatur und Feuchtigkeit stattfindet;
E) Wiederbeleben; in dem Wiederbelebungsschritt (E) wird die Temperatur des Teigs in zwei Schritten graduell erhöht: einem ersten Schritt, in dem die Temperatur des Teigs vorzugsweise auf 12°C gebracht wird, und einem zweiten Schritt, in dem die Temperatur des Teigs vorzugsweise auf 20°C gebracht wird; wobei der Wiederbelebungsschritt (E) durch eine Gesamtdauer zwischen 2 und 3 Stunden gekennzeichnet ist;
F) Fermentieren; in dem Fermentierungsschritt wird der Teig auf einem Knetbrett platziert und von Hand von einem zugehörigen Anwender bearbeitet, der geeignet ist, mit vorzugsweise mit Samenöl geölten Händen für ein Zeitintervall von maximal 5 Minuten Dauer zu arbeiten, um den Teig eine Konfiguration annehmen zu lassen, die mit mindestens einer Falte versehen wird; wobei der Fermentierungsschritt (F) **dadurch gekennzeichnet ist, dass** der Teig nach jedem Falten mit einem gewöhnlichen Tuch, vorzugsweise Leinen, bedeckt wird; wobei der Teig anschließend für ein Zeitintervall zwischen 2 und 3 Stunden aufgehen gelassen wird; wobei der Teig in dem Fermentierungsschritt (F) möglicherweise in eine Mehrzahl von getrennten kleinen Teigformen mit der gewünschten Form aufgeteilt wird; wobei die kleinen Teigformen in geeignete, getrennte Aufgehkörbe platziert werden;
G) Formen von Hand und abschließendes Formen; bei dem Schritt (G) des Formens von Hand und des abschließendes Formens wird der Teig in eine Mehrzahl von kleinen Teigformen mit der gewünschten Form aufgeteilt; jede der kleinen Teigformen wird in einem entsprechenden, zuvor mit einer Schicht aus gewöhnlichem Ofenpapier bedeckten oder zuvor mit Grieß bemehlten Aufgehkorb platziert;
H) Abschließendes Fermentieren; in dem Schritt (H) des abschließenden Fermentierens wird jeder der Mehrzahl von Aufgehkörben, vorzugsweise mittels eines gewöhnlichen, zuvor befeuchteten Leinentuchs, für ein Zeitintervall zwischen 30 Minuten und 60 Minuten abgedeckt; am Ende des Zeitintervalls werden die Aufgehkörbe von der Unterseite mit einer Temperatur von vorzugsweise gleich 28°C für ein Zeitintervall zwischen 1 Stunde und 2 Stunden erwärmt;
I) Backen und Trocknen; in dem Schritt (I) des Backens und Trocknens wird eine Mehrzahl von Schnitten vorzugsweise auf jeder der kleinen Teigformen vorgenommen, die angepasst sind, um das Brechen der Oberfläche der kleinen Teigformen in im Wesentlichen vorher festgelegten Punkten zu ermöglichen, und die kleinen Teigformen werden zusammen mit der gewöhnlichen Ofenpapierschicht in entsprechende, zum Backen im Ofen angepasste Behälter transferiert; die zum Backen im Ofen angepassten Behälter sind vorzugsweise durch gewöhnliche Aluminiumbehälter gebildet, die mit flexiblen Wänden versehen sind, die angepasst sind, die Ausdehnung der kleinen Teigformen zuzulassen; wobei der Schritt des Backens und Trocknens in mindestens vier Teilschritten stattfindet:
- ein erstes Backen im statischen Modus in einem geeigneten, zuvor auf eine Temperatur von 250°C aufgeheizten Ofen mit vorgegebener Feuchtigkeit für ein Zeitintervall von im Wesentlichen gleich 15 Minuten;
- ein zweites Backen bei einer Temperatur von 220°C mit vorgegebener Feuchtigkeit für ein Zeitintervall von im Wesentlichen gleich 35 Minuten;
- ein drittes Backen bei einer Temperatur gleich 220°C in Abwesenheit von Feuchtigkeit für ein Zeitintervall von im Wesentlichen gleich 10 Minuten, wobei das dritte Backen **dadurch gekennzeichnet ist, dass** die kleinen Teigformen zuvor aus den entsprechenden Behältern entnommen wurden;
- Trocknen, bei dem die kleinen Teigformen bei einer Temperatur von 140°C für ein Zeitintervall zwischen 15 Minuten und 30 Minuten in dem Ofen belassen werden; wobei der Schritt des Trocknens **dadurch gekennzeichnet ist, dass** in dem Ofen eine Funktion der Extraktion der inneren Feuchtigkeit angewendet wird;
wobei das Verfahren auch durch die folgenden spezifischen Techniken gekennzeichnet ist:
- Verwendung von niedrigen Temperaturen in den Auffrischschritten (A), beim Zubereiten des Vorteigs (B), dem Zubereiten des Teigs (C) und der Reifung (D);
- Einbringen von Luft bei der Bildung des Teigs;
- Verwendung von reinen Mehlen mit einer Hydratation von mehr als 70%.

2. Verfahren nach Anspruch 1, **dadurch gekennzeichnet, dass** in dem Schritt des Einbringens von Luft in den Teig (C.2) ein gewöhnliches mechanisches Instrument verwendet wird, wie beispielsweise als nicht-beschränkendes Beispiel ein manueller elektrischer Quirl mit Doppel-Schneebesen, ein Gegenmischer mit verstellbarem Doppel-Schneebesen oder ein anderes Instrument, das mit einem Doppel-Schneebesen versehen ist; wobei das mechanische Instrument angepasst ist, bei einer kleinen Dicke beginnend bei der oberen Oberfläche des Teigs in einer Weise verwendet zu werden, dass Luft in den Teig eingebracht wird, was dessen Bruch verhindert; wobei der Schritt des Einbringens von Luft in den Teig (C.2)), durch eine Dauer und eine Arbeitsgeschwindigkeit, die gemäß dem verwendeten mechanischen Instrument vorgegeben sind, gekennzeichnet ist.

3. Verfahren nach Anspruch 1, **dadurch gekennzeichnet, dass** der Reifungsschritt (D) 2- bis 5-mal länger ist als der normale Reifungsschritt, der 8 Stunden beträgt, ist, vorzugsweise 3-mal länger als der normale Reifungsschritt, d.h. 24 Stunden, ist, um das so erhaltene Produkt hochverdaulich zu machen, da der Proteinanteil aufgrund des Glutens besser verdaulich gemacht wird.

## Revendications

1. Procédé de fabrication de produits de boulangerie, de préférence fermentés, tels que, à titre d'exemple non limitatif, le pain, avec l'utilisation exclusive de farines complètes de blé et de farines semi-complètes de blé, de blé tendre, de blé dur ou d'épeautre, à faible "indice de force", obtenues avec des meules à pierre naturelle, **caractérisé en ce qu'**il est constitué par les étapes consécutives suivantes :
A) la propagation du levain sous forme liquide, communément connu sous le nom de Li.Co.Li (levain liquide) : dans ladite étape de propagation, le levain sous forme liquide est propagé deux fois de suite avant son utilisation, au moyen d'une quantité prédéterminée d'eau à température préétablie et d'une quantité prédéterminée de farine à température préétablie, ladite farine étant de préférence de la farine semi-complète de petit épeautre de blé ou de la farine complète de blé moulue par une pierre naturelle ou la même farine utilisée dans les étapes suivantes pour préparer la pré-pâte (B) et pour préparer la pâte (C) ; ladite propagation se produisant dans un milieu prévu à une température prédéterminée adaptée pour permettre l'obtention d'un produit constant ;
B) la préparation de la pré-pâte pour qu'elle soit réalisée dans les sous-étapes suivantes :
B.1) le mélange, à une vitesse prédéterminée et pendant un temps de malaxage préétabli, du levain avec une quantité prédéterminée de levure de bière fraîche sous pression et une quantité prédéterminée de farine préalablement tamisée, dans une quantité prédéterminée d'eau correspondant à l'eau totale prévue dans la recette de ladite pré-pâte ; ladite étape de mélange se produisant de préférence dans un mélangeur planétaire ;
B.2) le repos de ladite pré-pâte à une température comprise entre 17 °C et 19 °C, de préférence 18 °C et une humidité égale à 70 % ; ladite étape de repos se produisant de préférence dans une cellule commune à température et humidité contrôlées ; ladite pré-pâte étant prévue à une température de préférence égale à 18 °C ; ladite pré-pâte étant constituée par les ingrédients suivants :
- de la farine, en une quantité égale à 50 % de la farine totale de la recette ;
- de l'eau, en une quantité sensiblement égale à 45 % de la farine de ladite pré-pâte ;
- du levain « Li.Co.Li », en une quantité comprise entre 10 % et 15 % par rapport à la farine totale de la recette ; ladite quantité de levain « Li.Co.Li » variant en fonction du type de farine et de la durée de ladite étape de repos ;
- de la levure de bière fraîche sous pression, en une quantité comprise entre 0,5 % et 0,8 % par rapport à la farine de la pré-pâte ; ladite quantité de levure de bière variant en fonction du type de farine et de la durée de ladite étape de repos ;
ladite étape de repos ayant une durée qui est sensiblement comprise entre 15 heures et 18 heures ;
C) la préparation de la pâte pour qu'elle soit réalisée avec les ingrédients suivants :
- de la farine, en une quantité égale aux 50 % restants de la farine totale de la recette ;
- de l'eau, pourvue d'une dureté maximale égale à 20 degrés français, en une quantité sensiblement égale à l'eau totale prévue moins la quantité déjà utilisée dans les étapes de malaxage précédentes ;
- de la levure de bière fraîche sous pression, en une quantité comprise entre 0,2 % et 0,5 % sur le total de la farine restante de la recette ;
- du sel marin, en une quantité égale à 1,8 % sur le total de la farine de la recette ;
- du malt d'orge, en une quantité comprise entre 1 % et 1,5 % par rapport au total de la farine de la recette ;
ladite étape de préparation de la pâte étant adaptée pour être réalisée selon les sous-étapes suivantes :
C.1) la dissolution de ladite pré-pâte avec une quantité égale aux 3/4 de l'eau restante totale prévue, en ajoutant une quantité prédéterminée dudit malt et une quantité prédéterminée de ladite levure de bière fraîche sous pression et en mélangeant au moyen d'un mixeur à lames commun à une vitesse préétablie ; ladite dissolution étant **caractérisée par** une durée préétablie ;
C.2) l'introduction d'air dans la pâte, dans laquelle, en utilisant, à titre d'exemple non limitatif, un batteur électrique manuel prévu avec deux fouets ou un mélangeur de comptoir prévu avec un double fouet réglable ou tout autre instrument mécanique pourvu d'un double fouet ; ledit instrument mécanique étant utilisé, pendant un intervalle de temps et à une vitesse prédéterminés, seulement à une épaisseur prédéterminée à partir de la surface de ladite pâte de manière à permettre l'introduction d'air dans la pâte, augmentant le volume de celle-ci ; au cours de ladite étape d'introduction d'air dans la pâte, l'ajout d'une quantité de farine égale à la moitié de la farine restante de la recette et d'une quantité d'eau égale aux 3/4 de l'eau restante de la recette de manière à permettre la séparation de ladite pâte des parois et son gonflement ; ladite farine et ladite eau étant prévues à une température prédéterminée adaptée pour obtenir une pâte prévue à une température inférieure à 18 °C avant qu'elle soit placée pour reposer pour la maturation à froid ;
C.3) la finalisation de la pâte, effectuée de préférence au moyen dudit mélangeur planétaire pourvu d'un crochet pétrisseur ; dans ladite étape de finalisation de la pâte, l'ajout desdites farine et eau restantes de la recette et d'une quantité prédéterminée de sel, la poursuite du pétrissage à une vitesse préétablie et pendant un temps préétabli ; ladite sous-étape de finalisation de la pâte (C.3) comprenant possiblement l'ajout d'une quantité prédéterminée d'huile d'olive extra-vierge ;
C.4) la finalisation possible du raffermissement de la pâte, à effectuer de préférence à la main afin de rendre ladite pâte lisse et uniforme ; ladite étape de finalisation du raffermissement de la pâte ayant une durée propre à maintenir la température de ladite pâte stable, en dessous de 18 °C, avant qu'elle soit placée pour reposer pour la maturation à froid ;
D) la maturation de ladite pâte à basse température ; dans ladite étape de maturation (D), ladite pâte est placée à l'intérieur d'un récipient commun, préalablement huilé, de préférence avec de l'huile de graines, et laissée pour reposer pendant un temps compris entre 12 heures et 24 heures à une température comprise entre 2 °C et 4 °C et avec une humidité égale à environ 70 % ; ladite étape de maturation (D) se produisant de préférence mais non exclusivement au sein d'une cellule à température et humidité contrôlées ;
E) le ravivage ; dans ladite étape de ravivage (E), la température de ladite pâte est progressivement augmentée en deux étapes : une première étape dans laquelle la température de ladite pâte est portée de préférence à 12 °C et une seconde étape dans laquelle la température de ladite pâte est portée de préférence à 20 °C ; ladite étape de ravivage (E) étant **caractérisée par** une durée globale comprise entre 2 et 3 heures ;
F) la fermentation ; dans ladite étape de fermentation, ladite pâte est placée sur une planche à pétrir et malaxée à la main, par un utilisateur assigné apte à malaxer avec des mains huilées, de préférence huilées avec de l'huile de graines, pendant un intervalle de temps avec une durée maximale de 5 minutes, afin de faire en sorte que ladite pâte prenne une configuration pourvue d'au moins un pli ; ladite étape de fermentation (F) étant **caractérisée en ce que** ladite pâte est couverte avec un tissu commun, de préférence du lin, après chaque pliage ; ladite pâte étant ensuite laissée pour lever pendant un intervalle de temps compris entre 2 et 3 heures ; dans ladite étape de fermentation (F), ladite pâte peut être possiblement divisée en une pluralité de petites formations de pâte séparées avec la forme souhaitée ; lesdites petites formations de pâte étant placées pour lever dans des paniers de levée séparés appropriés ;
G) le façonnage manuel et le formage final ; dans ladite étape de façonnage manuel et formage final (G), ladite pâte est divisée en une pluralité de petites formations de pâte avec la forme souhaitée ; chacune desdites petites formations de pâte étant placée dans un panier de levée correspondant, préalablement couvert avec une couche de papier à four commun ou préalablement enfariné avec de la semoule ;
H) la fermentation finale ; dans ladite étape de fermentation finale (H), chacun de ladite pluralité de paniers de levée est couvert, de préférence au moyen d'un tissu commun en lin préalablement humidifié, pendant un intervalle de temps compris entre 30 minutes et 60 minutes ; à la fin dudit intervalle de temps, lesdits paniers de levée étant chauffés à partir du fond à une température de préférence égale à 28 °C, pendant un intervalle de temps compris entre 1 heure et 2 heures ;
I) la cuisson et le séchage ; dans ladite étape de cuisson et de séchage (I), une pluralité d'entailles sont pratiquées de préférence sur chacune desdites petites formations de pâte, adaptées pour permettre de briser la surface desdites petites formations de pâte en points sensiblement préétablis, et lesdites petites formations de pâte, conjointement avec ladite couche de papier à four commun, sont transférées dans les récipients correspondants adaptés pour une cuisson au four ; lesdits récipients adaptés pour une cuisson au four étant de préférence constitués par des récipients communs en aluminium pourvus de parois flexibles adaptées pour permettre l'expansion desdites petites formations de pâte ; ladite étape de cuisson et de séchage se produisant en au moins quatre étapes :
- une première cuisson en mode statique, dans un four approprié préalablement chauffé à une température égale à 250 °C, avec une humidité préétablie, pendant un intervalle de temps sensiblement égal à 15 minutes ;
- une deuxième cuisson, à une température égale à 220 °C, avec une humidité préétablie, pendant un intervalle de temps sensiblement égal à 35 minutes ;
- une troisième cuisson, à une température égale à 220 °C, en l'absence d'humidité, pendant un intervalle de temps sensiblement égal à 10 minutes ; ladite troisième cuisson étant **caractérisée en ce que** lesdites petites formations de pâte ont été préalablement extraites des récipients correspondants ;
- le séchage, dans lequel lesdites petites formations de pâte sont laissées à l'intérieur dudit four à une température égale à 140 °C pendant un intervalle de temps compris entre 15 minutes et 30 minutes ; ladite étape de séchage étant **caractérisée en ce que**, dans ledit four, une fonction d'extraction de l'humidité interne est appliquée ;
ledit procédé étant également **caractérisé par** les techniques spécifiques suivantes :
- l'utilisation de basses températures dans les étapes de propagation (A), dans la préparation de la pré-pâte (B), la préparation de la pâte (C) et la maturation (D) ;
- l'introduction d'air dans la formation de la pâte ;
- l'utilisation de farines pures avec une hydratation supérieure à 70 %.

2. Procédé, selon la revendication 1, **caractérisé en ce que**, dans ladite étape d'introduction d'air dans la pâte (C.2), un instrument mécanique commun est utilisé tel que, à titre d'exemple non limitatif, un batteur électrique manuel à double fouet, un mélangeur de comptoir à double fouet réglable ou tout autre instrument pourvu d'un double fouet ; ledit instrument mécanique étant adapté pour être utilisé sur une petite épaisseur à partir de la surface supérieure de ladite pâte, de manière à incorporer de l'air dans la pâte, empêchant la rupture de celle-ci ; ladite étape d'introduction d'air dans la pâte (C.2) étant **caractérisée par** une durée et une vitesse de malaxage qui sont préétablies en fonction de l'instrument mécanique utilisé.

3. Procédé, selon la revendication 1, **caractérisé en ce que** ladite étape de maturation (D) est 2 à 5 fois plus longue que l'étape de maturation normale, qui est de 8 heures, de préférence 3 fois plus longue que l'étape de maturation normale, c.-à-d. 24 heures, afin de rendre le produit ainsi obtenu hautement digestible, puisque la fraction protéique due au gluten est rendue plus digestible.
